# FASCICULE DE BREVET EUROPEEN

(11) **EP 2 958 854 B1**
(45) Date de publication et mention de la délivrance du brevet: **24.03.2021**
(21) Numéro de dépôt: 14706024.8
(22) Date de dépôt: 21.02.2014
(51) Int. Cl.: C01B 32/16

(54) **PROCÉDÉ DE FABRICATION D'UN NANOTUBE DE CARBONE MULTI-PAROIS; NANOTUBE, SOURCE D'ÉLECTRONS ET DISPOSITIF ASSOCIÉS**
VERFAHREN ZUR HERSTELLUNG EINES KOHLENSTOFFNANORÖHRCHENS MIT MEHREREN WÄNDEN, KOHLENSTOFFNANORÖHRCHEN SOWIE ZUGEHÖRIGE ELEKTRONENQUELLE UND VORRICHTUNG DAMIT
METHOD FOR PRODUCING A CARBON NANOTUBE HAVING MULTIPLE WALLS; NANOTUBE, AND ASSOCIATED ELECTRON SOURCE AND DEVICE

(30) Priorité: 22.02.2013 FR 1300416
(43) Date de publication de la demande: 30.12.2015
(73) Titulaire: THALES, 92400 Courbevoie (FR); Ecole Polytechnique, 91120 Palaiseau (FR)
(72) Inventeur: LEGAGNEUX, Pierre, F-91767 Palaiseau Cedex (FR); GANGLOFF, Laurent, F-91767 Palaiseau Cedex (FR); MAZELLIER, Jean-Paul, F-91767 Palaiseau Cedex (FR); ANDRIANIAZY, Florian, F-91767 Palaiseau Cedex (FR); COJOCARU, Costel - Sorin, F-91120 Palaiseau (FR); MAURICE, Jean-Luc, F-91120 Palaiseau (FR)
(74) Mandataire: Marks & Clerk France
(86) Numéro de dépôt international: PCT/EP2014/053406
(87) Numéro de publication internationale: WO 2014/128250

(56) Documents cités:
- ERIC MINOUX ET AL: "Achieving High-Current Carbon Nanotube Emitters", NANO LETTERS, vol. 5, no. 11, 1 novembre 2005 (2005-11-01), pages 2135-2138, XP055084129, ISSN: 1530-6984, DOI: 10.1021/nl051397d cité dans la demande
- M. Corrias: "Nouvelle Classe de catalyseurs pour la production massive en lit fluidisé de nanotubes de carbone multi parois", INPT ENSIACET Doctoral Thesis , 27 septembre 2011 (2011-09-27), XP002714865, Extrait de l'Internet: URL:http://ethesis.inp-toulouse.fr/archive /00001686/ [extrait le 2013-10-15]
- COJOCARU C S ET AL: "Study of electron field emission from arrays of multi-walled carbon nanotubes synthesized by hot-wire dc plasma-enhanced chemical vapor deposition", JOURNAL OF NON-CRYSTALLINE SOLIDS, NORTH-HOLLAND PHYSICS PUBLISHING. AMSTERDAM, NL, vol. 352, no. 9-20, 15 juin 2006 (2006-06-15), pages 1352-1356, XP028046937, ISSN: 0022-3093, DOI: 10.1016/J.JNONCRYSOL.2006.01.065 [extrait le 2006-06-15]
- LE NORMAND F ET AL: "Single oriented carbon nanotubes growth on array of processed microelectrodes", SEMICONDUCTOR CONFERENCE, 2004. CAS 2004 PROCEEDINGS. 2004 INTERNATION AL SINAIA, ROMANIA 4-6 OCT. 2004, PISCATAWAY, NJ, USA,IEEE, US, vol. 1, 4 octobre 2004 (2004-10-04), pages 97-100, XP010776004, ISBN: 978-0-7803-8499-6

## Description

L'invention est relative à un procédé de fabrication d'un nanotube de carbone multi-parois, comprenant des étapes consistant à :
- déposer, sur un substrat, un nanoplot en un matériau catalyseur ;
- faire croître un nanotube à partir dudit nanoplot.

La croissance d'une pluralité de nanotubes sur un substrat conduit à la formation d'un réseau de nanotubes individuels.

L'apex d'un nanotube de carbone utilisé en tant que pointe émettrice d'un courant électrique est soumis à des températures extrêmes. Schématiquement, la puissance dissipée par effet Joule dans le nanotube dépend de la conductance électrique totale du nanotube, tandis que l'efficacité du refroidissement de l'apex du nanotube par le substrat dépend de la conductance thermique totale du nanotube. Or, les nanotubes présentant un fort rapport entre leur longueur et leur diamètre (c'est-à-dire un rapport d'aspect de l'ordre de 100), leurs conductances électriques et thermiques totales restent relativement faibles.

Certaines études approfondies de l'émission d'un réseau de nanotubes individuels tendent à montrer que le courant maximum que peut émettre un nanotube de carbone est atteint lorsque la température de son apex est d'environ 2000 K (Purcell et al., Phys. ReV. Lett. 2002, 88, 105502).

Ces études montrent donc que la conductivité électrique et la conductivité thermique des nanotubes sont deux paramètres essentiels, qui déterminent le courant maximum que peut émettre un nanotube.

Or, les conductivités électrique et thermique dépendent fortement de la qualité cristalline du nanotube. Ainsi, la mise au point d'un procédé de croissance permettant l'obtention de nanotubes présentant une excellente qualité cristalline est primordiale.

Un nanotube de carbone mono-paroi est constitué d'un plan de graphène enroulé sur lui même (son diamètre est de l'ordre du nanomètre). Un nanotube de carbone multi-parois est constitué de plusieurs plans de graphène concentriques. La distance entre les plans est de l'ordre de 0,34 nm. Le diamètre d'un nanotube multi-parois varie de quelques nanomètres à plusieurs dizaines de nanomètres.

A cause de sa structure, les propriétés physiques d'un cristal de graphite (c'est-à-dire d'un empilement de plans de graphène) sont anisotropes : la conductivité électrique d'un cristal de graphite est très élevée dans une direction parallèle aux plans de graphène, mais relativement faible dans une direction perpendiculaire à ces plans.

A cause de ces propriétés de conduction thermique et électrique, les nanotubes de carbone multi-parois sont de bons candidats pour constituer des pointes émettrices de courant de bonne qualité.

Un premier procédé connu de fabrication d'un nanotube de carbone multi-parois orienté verticalement consiste à déposer, sur un substrat, un nanoplot en nickel, puis à faire croître un nanotube à partir du nanoplot par mise en œuvre d'une méthode de croissance par dépôt de carbone en phase vapeur assistée par plasma (PECVD). La paroi latérale de graphite du nanotube obtenu par ce procédé de fabrication présente de nombreux défauts cristallins. Elle s'écarte fortement d'un monocristal. De plus, la paroi latérale présente une structure dite « en bambou » dans laquelle le nanotube est subdivisé, selon sa hauteur, en plusieurs sections par la présence de plans de graphène disposés transversalement à l'axe du nanotube. Enfin, la paroi latérale de chaque section du nanotube présente une forme conique s'écartant de la forme cylindrique théorique. Cette forme conique impose aux électrons se déplaçant axialement, depuis le substrat, vers l'apex du nanotube, de passer d'un plan de graphène à un autre. Ceci a pour conséquence une chute de la conductivité électrique et, par conséquent, de la conductivité thermique du nanotube obtenu.

Lors de la mise en œuvre de ce procédé de fabrication, au cours de l'étape de croissance, l'apex d'un nanotube est recouvert d'une couche de carbone amorphe. On peut alors réaliser un recuit thermique post croissance, sous vide et à une température d'environ 900 °C, afin d'obtenir des plans de graphène au sommet du nanotube (Minoux et al., Nano Letters 5, 2135 - 2005). Un tel apex est propre à émettre un courant fort ayant une bonne stabilité dans le temps.

Un second procédé de fabrication connu a récemment été mis au point par les inventeurs. Il comporte une étape de croissance de nanotubes de carbone multi-parois en mettant en œuvre une méthode de croissance PECVD à partir d'un nanoplot de fer.

La paroi latérale du nanotube obtenu par la mise en œuvre de ce procédé présente une qualité cristalline excellente. En particulier, les différents plans de graphène constitutifs de la paroi du nanotube sont parfaitement alignés avec l'axe du nanotube. De plus, chaque plan est formé d'un monocristal de graphène. En conséquence, le nanotube obtenu se caractérise par des conductivités électrique et thermique élevées (c'est-à-dire des résistances électrique et thermique réduites).

Cependant, l'apex de ce nanotube est constitué par une particule de fer, constituant du nanoplot initial. Or, le fer présente une surface à la fois instable et sujette à l'oxydation. De ce fait, les nanotubes obtenus par la mise en œuvre de ce second procédé connu ne présentent pas de bonnes propriétés d'émission, en particulier, en termes de stabilité du courant émis. De plus, la possibilité de réaliser un recuit à 900 °C afin de recouvrir la surface supérieure du nanoplot d'un plan de graphène n'est pas envisageable ici, car, compte tenu des conditions expérimentales, le fer du nanoplot change d'état à 750 °C.

L'invention a donc pour but de pallier les problèmes précités en proposant un procédé de fabrication d'un nanotube de carbone multi-parois présentant de très bonnes propriétés de conductivité électrique et thermique, et donc des propriétés d'émission de courant de premier ordre.

Pour cela l'invention a pour objet un procédé de fabrication d'un nanotube de carbone multi-parois, comprenant des étapes consistant à :
- déposer, sur un substrat, un nanoplot en un matériau catalyseur ;
- faire croître un nanotube à partir dudit nanoplot,
caractérisé en ce qu'il comporte une étape consistant à faire croître au moins un plan de graphène à l'apex dudit nanotube par dépôt de carbone en phase vapeur.

Selon d'autres modes de réalisation, le procédé comporte une ou plusieurs des caractéristiques suivantes, prise(s) isolément ou suivant toutes les combinaisons techniquement possibles :
- ledit dépôt de carbone en phase vapeur est assisté par filaments chauds ;
- l'étape consistant à faire croître un nanotube est effectuée par dépôt de carbone en phase vapeur, des gaz précurseurs d'atomes de carbone étant préalablement dissociés par un plasma ;
- l'étape consistant à faire croître un nanotube de carbone est effectuée en présence de vapeur d'eau ;
- lorsque l'étape consistant à faire croître un nanotube de carbone est effectuée sans présence de vapeur d'eau, le procédé comporte, le procédé comporte, après l'étape de croissance du nanotube, une étape supplémentaire de décapage, d'une surface extérieure du catalyseur, au moyen d'un oxydant léger, qui de préférence est de la vapeur d'eau ;
- les conditions expérimentales de l'étape consistant à faire croître le nanotube sont les suivantes :
   - une température : entre 500 et 700 °C, de préférence entre 550 et 650 °C, notamment 600 °C,
   - une pression : entre 1 et 10 mbar, de préférence entre 3 et 7 mbar, notamment 5 mbar ;
   - un gaz précurseur d'atomes de carbone choisi parmi la famille du C₂H₂, du CH₄, du C₂H₆, de l'éthanol et de l'isopropanol ;
- les conditions expérimentales de l'étape consistant à faire croître au moins un plan de graphène à l'apex du nanotube sont les suivantes :
   - une température : entre 200 et 800 °C, de préférence entre 300 et 600 °C, notamment 350 °C ;
   - une température des filaments : entre 1400 et 2000 °C, de préférence entre 1600 et 1800 °C, notamment 1750 °C ;
   - une pression entre : 5 et 100 mbar ;
   - un gaz précurseur des atomes de carbone choisi parmi la famille du C₂H₂, du CH₄, du C₂H₆, de l'éthanol et de l'isopropanol ;
- l'étape consistant à faire croître un nanotube est poursuivie jusqu'à obtenir un nanotube ayant une hauteur entre 1 et 50 µm, de préférence égale à 5 µm ;
- lors de l'étape consistant à faire croître un nanotube, le nanotube croît sensiblement perpendiculairement à une surface du substrat, le substrat étant de préférence disposé horizontalement, le nanotube croît alors sensiblement verticalement ;
- les deux étapes consistant à faire croître un nanotube puis au moins un plan de graphène à l'apex du nanotube obtenu, sont réalisées successivement dans une même enceinte ;
- ledit matériau catalyseur comporte majoritairement un métal choisi parmi le nickel, le cobalt et le fer ;
- ledit matériau catalyseur comporte majoritairement du fer.

L'invention sera mieux comprise à la lecture de la description qui va suivre d'un mode de réalisation particulier, donnée uniquement à titre d'exemple et faite en se référant aux dessins annexés sur lesquels :
- la figure 1 est une représentation schématique du résultat d'une première étape du procédé de fabrication selon l'invention ;
- la figure 2 est une représentation schématique du résultat d'une seconde étape du procédé de fabrication selon l'invention ; et,
- la figure 3 est une représentation schématique du résultat d'une troisième étape du procédé de fabrication selon l'invention consistant en une source d'électrons constituée par un réseau de nanotubes de carbone multiplans.

Le procédé de fabrication d'un réseau comportant au moins un nanotube de carbone multi-parois comporte les trois étapes successives suivantes.

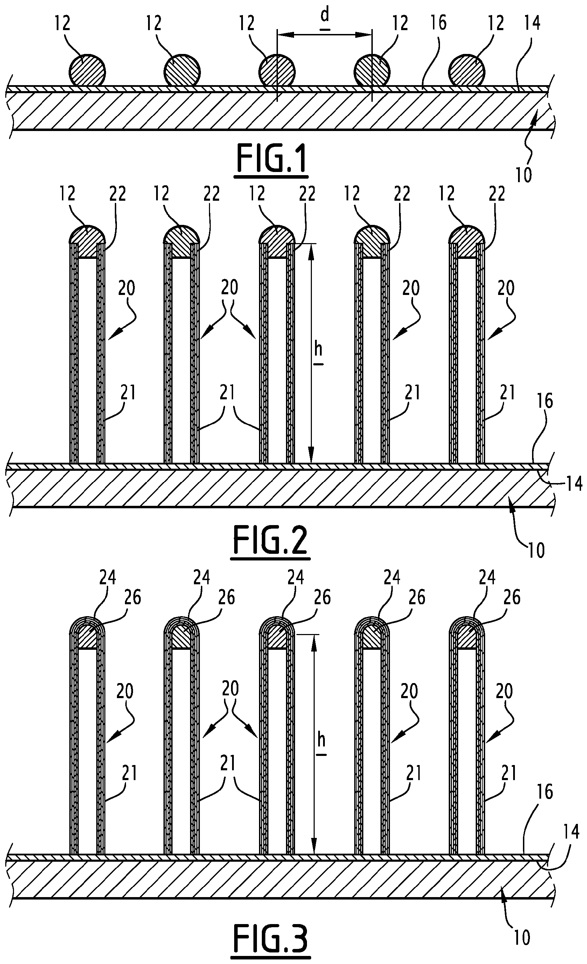

La première étape est illustrée par la figure 1.

Sur un substrat 10 sont déposés des nanoplots 12 en un matériau catalyseur. De préférence, chaque nanoplot 12 a la forme d'un disque.

Le substrat 10, est, par exemple et de préférence, constitué d'une plaque de silicium disposée horizontalement dans une enceinte adaptée. La surface supérieure 14 du substrat 10 est avantageusement passivée par le dépôt d'une barrière de diffusion 16 afin d'empêcher toute réaction chimique et réduire l'adhérence entre le catalyseur d'un nanoplot 12 et le silicium du substrat. Avantageusement, le matériau constitutif de la barrière de diffusion 16 est choisi afin que le nanoplot 12 démouille.

Les nanoplots 12 sont disposés sur le substrat 10 à l'endroit où les nanotubes seront crus sur le substrat 10. La disposition des nanoplots 12 reprend donc le motif du réseau de nanotubes que l'on souhaite obtenir.

Pour la constitution d'un réseau de nanotubes individuels constituant une source d'électrons, les nanoplots 12 sont espacés d'une distance d égale à environ la hauteur des nanotubes, par exemple de 5 micromètres.

Le matériau catalyseur dont sont constitués les nanoplots 12 est sélectionné afin de permettre la diffusion des atomes de carbone à travers le volume du nanoplot, vers le point de nucléation des plans de graphène constitutifs de la paroi du nanotube.

Le matériau catalyseur est constitué majoritairement d'un métal de transition. Par exemple, le fer, le cobalt ou le nickel sont utilisés. De préférence, le fer est utilisé.

La seconde étape du procédé de fabrication, illustrée par la figure 2, consiste à faire croître, sensiblement verticalement à partir du substrat 10, des nanotubes de carbone multi-parois 20.

La méthode de croissance mise en œuvre dans cette étape est un dépôt de carbone en phase vapeur assisté par plasma (PECVD).

Les conditions expérimentales sont les suivantes :
- température de l'enceinte : entre 500 et 700 °C, de préférence entre 550 et 650 °C, notamment 600 °C ;
- pression : entre 1 et 10 mbar, de préférence entre 3 et 7 mbar, notamment 5 mbar ;
- gaz précurseur d'atomes de carbone : C₂H₂.

D'autres types de précurseur d'atomes de carbone pourraient être choisis. On citera comme exemple de composé carboné utilisable le CH₄, le C₂H₆, etc.

Le temps de croissance est alors entre 1 et 60 mn en fonction de la hauteur h du nanotube 20 que l'on souhaite obtenir et de la qualité cristalline recherchée pour les plans de graphène.

Lors de cette seconde étape, sous les effets de la température et de la pression régnant dans l'enceinte, il y a dissociation du gaz précurseur de manière à produire des atomes de carbone propres à être dissous au niveau de la surface ou dans le volume des nanoplots 12.

Les atomes de carbone diffusent vers les points de nucléation des plans de graphène constitutifs de la paroi latérale du nanotube 20 en croissance.

Comme cela est représenté sur la figure 2, les plans de graphène sont d'abord nucléés sur le contour de l'interface entre le nanoplot 12 et le substrat 10, puis à l'interface entre la section transversale de la paroi latérale du nanotube 20 et le nanoplot 12.

La croissance du nanotube 20 s'effectue alors sensiblement perpendiculairement au substrat 10. Au fur et à mesure de la croissance du nanotube 20, le nanoplot 12 est soulevé à l'écart du substrat 10 et est porté par l'extrémité libre 22 du nanotube 20 dont l'autre extrémité est en contact du substrat 10.

Cette étape de croissance du nanotube est stoppée lorsque le nanotube 20 a atteint une hauteur h souhaitée, typiquement entre 1 et 10 µm, par exemple égale à 5 µm.

Puis, le procédé de fabrication se termine par une troisième étape, illustrée sur la figure 3. Il s'agit d'une étape de croissance de plans de graphène sur la surface supérieure libre 22 du nanotube 20, pour former l'apex 24 du nanotube 20.

De préférence, cette étape est réalisée dans la même enceinte que celle dans laquelle a eu lieu l'étape de croissance des nanotubes.

Dans cette troisième étape, est mise en œuvre une méthode de dépôt en phase vapeur assistée par filaments chauds (HWCVD).

Les conditions expérimentales sont les suivantes :
- température de l'enceinte : entre 200 et 800 °C, de préférence entre 300 et 600 °C, notamment 350 °C ;
- température des filaments : entre 1400 et 2000 °C, de préférence entre 1600 et 1800 °C, notamment 1750 °C ;
- pression à l'intérieur de l'enceinte : entre 5 et 100 mbar ;
- gaz précurseur d'atomes de carbone : C₂H₂.

En variante, d'autres précurseurs d'atomes de carbone sont utilisés, tels que du CH₄, du C₂H₆, de l'isopropanol, ou des composants appartenant aux familles de ces derniers.

Les filaments chauds permettent de dissocier le gaz précurseur de manière à produire un gaz d'atomes de carbone.

Le temps de croissance est alors entre 1 et 10 minutes en fonction de la qualité cristalline recherchée pour les plans de graphène à l'apex du nanotube.

Des atomes de carbone viennent poursuivre la nucléation des plans de graphène de la paroi latérale du nanotube 20 de sorte qu'il y a continuité entre les plans de graphène constituant la paroi latérale 21 du nanotube et les plans de graphène sensiblement transversaux constituant l'apex 24 du nanotube 20.

La croissance des plans de graphène à l'apex 24 du nanotube s'effectue de manière à recouvrir extérieurement le nanoplot 12. Il en résulte que le nanotube 20 finalement obtenu renferme une particule de fer 26, résidu du nanoplot 12.

La croissance des plans de graphène à l'apex 24 du nanotube 20 se produit par l'adsorption dissociative des molécules et de radicaux actifs issus de la décomposition par les filaments chauds du gaz précurseur, qui libère catalytiquement des atomes de carbone en surface de la particule métallique 26. Les atomes de carbone ainsi libérés peuvent s'organiser en surface pour créer les plans graphitiques souhaités pour refermer l'apex du nanotube. Une partie de ces atomes de carbone, suivant la température du procédé, peuvent aussi diffuser à travers la particule 26, ce phénomène pouvant être limité par un abaissement de la température de process. On comprend bien que ce mécanisme de croissance présume que la surface de la particule 26, après la croissance du nanotube, est active catalytiquement et donc exempte de dépôts parasites, comme par exemple du carbone amorphe ou partiellement graphitisé.

C'est pourquoi, la seconde étape (croissance PECVD) s'effectue en présence de vapeur d'eau. Il a en effet été constaté que cela permet au nanoplot de catalyseur, en particulier au nanoplot de fer, d'être exempt de dépôts parasites. Ceci facilite, dans la troisième étape, la croissance de plans de graphène exempts de défauts cristallins.

En variante, lorsque la seconde étape de croissance n'est pas réalisée en présence de vapeur d'eau, le procédé comporte une étape supplémentaire immédiatement après la seconde étape de croissance. Cette étape supplémentaire consiste à décaper la surface supérieure du nanoplot de catalyseur sur laquelle on souhaite faire croître des plans de graphène ayant une bonne qualité cristalline. Le décapage s'effectue avec un oxydant léger pour ne pas altérer la paroi latérale du nanotube. De la vapeur d'eau est pour cela utilisée. Le décapage a pour effet de vaporiser les dépôts de carbone amorphe présents à la surface du nanoplot.

De préférence, dans le procédé de fabrication, le catalyseur est du fer. En effet, comme indiqué en introduction, la structure cristalline de la paroi latérale du nanotube obtenue en utilisant le fer est proche de celle d'un nanotube parfait.

Par la mise en œuvre du procédé de fabrication venant d'être présenté, on obtient un nanotube présentant à la fois une excellente qualité cristalline, qui conduit à de bonnes conductivités thermique et électrique le long de la paroi latérale du nanotube, et un apex constitué de plans graphitiques monocristallins ou faiblement polycristallins, qui possède une excellente stabilité chimique et thermique et, par conséquent, d'excellentes propriétés d'émission (émission d'un courant fort présentant une très bonne stabilité dans le temps).

Un nanotube de carbone multi-parois est utilisé en tant que source d'électrons (cathodes) dans des dispositifs variés, tels que des microscopes électroniques, des tubes électroniques pour l'amplification (en particulier, des tubes hyperfréquences), des tubes à ondes progressives, des tubes à rayon X pour l'imagerie (en particulier dans le domaine médical, de la sécurité ou du contrôle industriel non destructif) et, plus généralement, comme source d'électrons dans l'instrumentation.

La plupart des dispositifs qui intègrent des sources d'électrons nécessitent de forts courants. En conséquence, est particulièrement bien adaptée à ce type d'applications une source d'électrons constituée par un réseau comportant une pluralité de nanotubes de carbone multi-parois individuels.

Une autre application possible d'un nanotube obtenu par la mise en œuvre du procédé présenté ici, consiste à l'utiliser en tant que moyen de connexion électrique, par exemple verticale, entre deux composants d'un circuit électronique.

Les nanotubes obtenus par la mise en œuvre du procédé présenté ci-dessus présentent une très bonne qualité cristalline à la fois le long du nanotube, c'est-à-dire une très faible résistance électrique, et à leur apex, c'est-à-dire une faible résistance de contact.

Dans encore une autre application, la pointe conductrice d'une nanosonde pour l'analyse des surfaces est constituée par un nanotube de carbone multi-parois. On retrouve de telles nanosondes par exemple dans des dispositifs du type microscope à force atomique pour l'électrochimie ou la biologie.

## Revendications

1. Procédé de fabrication d'un nanotube de carbone multi-parois, comprenant des étapes consistant à :
- déposer, sur un substrat (10), un nanoplot (12) en un matériau catalyseur ;
- faire croître un nanotube (20) à partir dudit nanoplot,
**caractérisé en ce qu'**il comporte une étape consistant à faire croître au moins un plan de graphène à l'apex (24) dudit nanotube par dépôt de carbone en phase vapeur.

2. Procédé selon la revendication 1, dans lequel ledit dépôt de carbone en phase vapeur est assisté par filaments chauds.

3. Procédé selon la revendication 1 ou la revendication 2, dans lequel l'étape consistant à faire croître un nanotube (20) est effectuée par dépôt de carbone en phase vapeur, des gaz précurseurs d'atomes de carbone étant préalablement dissociés par un plasma.

4. Procédé selon la revendication 3, dans lequel l'étape consistant à faire croître un nanotube de carbone est effectuée en présence de vapeur d'eau.

5. Procédé selon la revendication 3, **caractérisé en ce que**, lorsque l'étape consistant à faire croître un nanotube de carbone est effectuée sans présence de vapeur d'eau, le procédé comporte, après l'étape de croissance du nanotube, une étape supplémentaire de décapage, d'une surface extérieure du catalyseur, au moyen d'un oxydant léger, qui de préférence est de la vapeur d'eau.

6. Procédé selon la revendication 4 ou la revendication 5, dans lequel les conditions expérimentales de l'étape consistant à faire croître le nanotube (20) sont les suivantes :
- une température : entre 500 et 700 °C, de préférence entre 550 et 650 °C, notamment 600 °C,
- une pression : entre 1 et 10 mbar, de préférence entre 3 et 7 mbar, notamment 5 mbar ;
- un gaz précurseur d'atomes de carbone choisi parmi la famille du C₂H₂, du CH₄, du C₂H₆, de l'éthanol et de l'isopropanol.

7. Procédé selon l'une quelconque des revendications 2 à 6, dans lequel les conditions expérimentales de l'étape consistant à faire croître au moins un plan de graphène à l'apex (24) du nanotube sont les suivantes :
- une température : entre 200 et 800 °C, de préférence entre 300 et 600 °C, notamment 350 °C ;
- une température des filaments : entre 1400 et 2000 °C, de préférence entre 1600 et 1800 °C, notamment 1750 °C ;
- une pression entre : 5 et 100 mbar ;
- un gaz précurseur des atomes de carbone choisi parmi la famille du C₂H₂, du CH₄, du C₂H₆, de l'éthanol et de l'isopropanol.

8. Procédé selon l'une quelconque des revendications précédentes, dans lequel, lors de l'étape consistant à faire croître un nanotube (20), le nanotube croît sensiblement perpendiculairement à une surface (14) du substrat, le substrat étant de préférence disposé horizontalement, le nanotube croît alors sensiblement verticalement.

9. Procédé selon l'une quelconque des revendications précédentes, dans lequel les deux étapes consistant à faire croître un nanotube (20) puis au moins un plan de graphène à l'apex du nanotube obtenu, sont réalisées successivement dans une même enceinte.

10. Procédé selon l'une quelconque des revendications 1 à 9, dans lequel ledit matériau catalyseur comporte majoritairement un métal choisi parmi le nickel, le cobalt et le fer.

## Patentansprüche

1. Verfahren zur Herstellung eines Kohlenstoff-Nanoröhrchens mit mehreren Wänden, folgende Schritte umfassend:
- Ablagern, auf einem Substrat (10), eines Nanohöckers (12) aus einem Katalysatormaterial;
- Herbeiführen von Wachstum eines Nanoröhrchens (20) anhand des Nanohöckers,
**dadurch gekennzeichnet, dass** es einen Schritt des Herbeiführens von Wachstum von mindestens einer Graphenebene an der Spitze (24) des Nanoröhrchens durch Ablagerung von Kohlenstoff in der Dampfphase umfasst.

2. Verfahren nach Anspruch 1, wobei die Kohlenstoffablagerung in der Dampfphase durch warme Filamente unterstützt wird.

3. Verfahren nach Anspruch 1 oder Anspruch 2, wobei der Schritt des Herbeiführens von Wachstum eines Nanoröhrchens (20) durch Ablagern von Kohlenstoff in der Dampfphase erfolgt, wobei Vorläufergase von Kohlenstoffatomen zuvor durch ein Plasma dissoziiert werden.

4. Verfahren nach Anspruch 3, wobei der Schritt des Herbeiführens von Wachstum eines Nanoröhrchens aus Kohlenstoff im Beisein von Wasserdampf erfolgt.

5. Verfahren nach Anspruch 3, **dadurch gekennzeichnet, dass**, wenn der Schritt des Herbeiführens von Wachstum eines Nanoröhrchens aus Kohlenstoff ohne Beisein von Wasserdampf erfolgt, das Verfahren nach dem Schritt des Wachstums des Nanoröhrchens einen zusätzlichen Schritt des Abbeizens einer Außenfläche des Katalysators umfasst, mithilfe eines leichten Oxidationsmittels, welches vorzugsweise Wasserdampf ist.

6. Verfahren nach Anspruch 4 oder Anspruch 5, wobei die experimentellen Bedingungen des Schrittes des Herbeiführens von Wachstum des Nanoröhrchens (20) wie folgt lauten:
- eine Temperatur: zwischen 500 und 700 °C, vorzugsweise zwischen 550 und 650 °C, insbesondere 600 °C,
- einen Druck: zwischen 1 und 10 mBar, vorzugsweise zwischen 3 und 7 mBar, insbesondere 5 mBar,
- ein Kohlenstoffatom-Vorläufergas, ausgewählt aus der Familie von C₂H₂, von CH₄, von C₂H₆, aus Ethanol und Isopropanol.

7. Verfahren nach einem der Ansprüche 2 bis 6, wobei die experimentellen Bedingungen des Schrittes des Herbeiführens von Wachstum von mindestens einer Graphenebene an der Spitze (24) des Nanoröhrchens wie folgt lauten:
- eine Temperatur: zwischen 200 und 800 °C, vorzugsweise zwischen 300 und 600 °C, insbesondere 350 °C;
- eine Temperatur der Filamente: zwischen 1 400 und 2 000 °C, vorzugsweise zwischen 1 600 und 1 800 °C, insbesondere 1 750 °C;
- einen Druck zwischen: 5 und 100 mBar;
- ein Vorläufergas der Kohlenstoffatome, ausgewählt aus der Familie von C₂H₂, von CH₄, von C₂H₆, aus Ethanol und Isopropanol.

8. Verfahren nach einem der vorhergehenden Ansprüche, wobei, bei dem Schritt des Herbeiführens von Wachstum eines Nanoröhrchens (20), das Nanoröhrchen im Wesentlichen rechtwinklig zu einer Oberfläche (14) des Substrates wächst, wobei das Substrat vorzugsweise horizontal angeordnet ist, das Nanoröhrchen wächst dann im Wesentlichen vertikal.

9. Verfahren nach einem der vorhergehenden Ansprüche, wobei die beiden Schritte des Herbeiführens von Wachstum eines Nanoröhrchens (20) und anschließend von mindestens einer Graphenebene an der Spitze des erzielten Nanoröhrchens nacheinander in einer gleichen Einhausung erfolgen.

10. Verfahren nach einem der Ansprüche 1 bis 9, wobei das Katalysatormaterial mehrheitlich ein Metall umfasst, ausgewählt aus Nickel, Kobalt und Eisen.

## Claims

1. A method for manufacturing a carbon nanotube with multiple walls, comprising the steps of:
- depositing a nanoplot (12) made of a catalyst material onto a substrate (10);
- growing a nanotube (20) from said nanoplot;
**characterised in that** it comprises a step of growing at least one graphene plane at the apex (24) of said nanotube by depositing carbon in the vapour phase.

2. The method as claimed in claim 1, wherein said depositing of carbon in the vapour phase is assisted by hot filaments.

3. The method as claimed in claim 1 or claim 2, wherein the step of growing a nanotube (20) is carried out by depositing carbon in the vapour phase, wherein gas precursors of carbon atoms are previously separated by a plasma.

4. The method as claimed in claim 3, wherein the step of growing a carbon nanotube is carried out in the presence of water vapour.

5. The method as claimed in claim 3, **characterised in that**, when the step of growing a carbon nanotube is carried out without the presence of water vapour, the method comprises, after the step of growing the nanotube, an additional step of cleaning an outer surface of the catalyst by means of a light oxidant, which preferably is water vapour.

6. The method as claimed in claim 4 or claim 5, wherein the experimental conditions of the step of growing the nanotube (20) are as follows:
- a temperature: between 500 and 700°C, preferably between 550 and 650°C, in particular 600°C;
- a pressure: between 1 and 10 mbar, preferably between 3 and 7 mbar, in particular 5 mbar;
- a gas precursor of carbon atoms selected from the family of C₂H₂, of CH₄, of C₂H₆, of ethanol and of isopropanol.

7. The method as claimed in any one of claims 2 to 6, wherein the experimental conditions of the step of growing at least one graphene plane at the apex (24) of the nanotube are as follows:
- a temperature: between 200 and 800°C, preferably between 300 and 600°C, in particular 350°C;
- a filament temperature: between 1,400 and 2,000°C, preferably between 1,600 and 1,800°C, in particular 1,750°C;
- a pressure between: 5 and 100 mbar;
- a gas precursor of carbon atoms selected from the family of C₂H₂, of CH₄, of C₂H₆, of ethanol and of isopropanol.

8. The method as claimed in any one of the preceding claims, wherein, during the step of growing a nanotube (20), the nanotube grows substantially perpendicular to a surface (14) of the substrate, the substrate preferably being disposed horizontally, the nanotube then grows substantially vertically.

9. The method as claimed in any one of the preceding claims, wherein the two steps of growing a nanotube (20), then at least one graphene plane at the apex of the obtained nanotube, are successively carried out in the same chamber.

10. The method as claimed in any one of claims 1 to 9, wherein said catalyst material mainly comprises a metal selected from nickel, cobalt and iron.
